Europäisches Patentamt

European Patent Office

Office européen des brevets

(11) Publication number: **0 511 721 A2**

## EUROPEAN PATENT APPLICATION

(21) Application number: 92202084.7

(51) Int. Cl.⁵: **G03B 21/60**

(22) Date of filing: 29.09.88

This application was filed on 08 - 07 - 1992 as a divisional application to the application mentioned under INID code 60.

(30) Priority: **06.10.87 US 107087**
**27.05.88 NL 8801361**

(43) Date of publication of application:
**04.11.92 Bulletin 92/45**

(60) Publication number of the earlier application in accordance with Art.76 EPC: **0 311 189**

(84) Designated Contracting States:
**DE FR GB IT**

(71) Applicant: **N.V. Philips' Gloeilampenfabrieken**
**Groenewoudseweg 1**
**NL-5621 BA Eindhoven(NL)**

(72) Inventor: **Bradley, Ralph Hampton**
**c/o INT. OCTROOIBUREAU B.V., Prof.**
**Holstlaan 6**
**NL-5656 AA Eindhoven(NL)**
Inventor: **Guerinot, William Francis**
**c/o INT. OCTROOIBUREAU B.V., Prof.**
**Holstlaan 6**
**NL-5656 AA Eindhoven(NL)**
Inventor: **Van de Ven, Johannes Cornelis**
**c/o INT. OCTROOIBUREAU B.V., Prof.**
**Holstlaan 6**
**NL-5656 AA Eindhoven(NL)**

(74) Representative: **Cobben, Louis Marie Hubert**
**et al**
**INTERNATIONAAL OCTROOIBUREAU B.V.**
**Prof. Holstlaan 6**
**NL-5656 AA Eindhoven(NL)**

(54) **Front projection screen with reflected light concentrating lens array.**

(57) An LCD color television front projection screen is described that has a rear vertically oriented lenticular lens array, the sidewalls (31) of the lenticules steeply inclined to achieve total internal reflection of rays from a projected image into tip (33) regions of the lenticules, an external reflective surface (35) behind the array for reflecting the projected rays back into an audience field in front of the screen, and black masking (39) between the lenticules for absorbing ambient rays.

The invention relates to a front projection screen for displaying an image from an image source in an audience space, the screen comprising a light transmissive layer having a front surface and a rear surface, the front surface facing the audience space, and comprising a lenticular lens array.

Front projection screens are useful in a variety of applications, for example, television, motion picture and other video and film media displays. In such applications, an image source in front of the screen projects an image forward along a central projection axis to the screen, which displays the image to viewers in an audience field, also located in front of the screen.

A problem encountered in these front projection systems is that the image contrast is often reduced by the presence of ambient light. This is particularly troublesome in those applications in which a dedicated projection room is not practical, for example, projection television for the consumer market. In such cases, the source and character of ambient lighting is generally unpredictable and thus uncontrollable.

It is known to increase the image contrast of front projection screens by concentrating the projected light into a multiplicity of picture elements, or "pixels", and by providing an array of reflective areas on a rear surface of the screen to reflect the pixels back through the front surface and into the audience space. Ambient light which enters the screen at oblique angles to the projection axis generally falls on light absorbing areas surrounding the light reflecting areas, and is consequently absorbed. See US-A 4,298,246 and US-A 4,606,609.

In US-A 4,298,246 the front surface is made up of a two-dimensional array of convex lenslets which focus the projected image behind the reflecting areas of the rear surface of the screen, resulting in some spreading of the image as it is reflected back into the audience field.

In US-A 4,606,609 the screen is made up of a plurality of optical cells, each having a front convex lens surface, and a rear surface contoured to collimate the reflected light into a narrow beam. Spreading of the image is accomplished by light diffusing areas on the front lens surfaces located in the path of the reflected light, which diffuse the beams into the audience field.

In the above arrangements, optimum performance is dependent upon holding a relatively close tolerance on screen thickness, as well as upon the registration between the front and back surfaces, both needed to insure that the focal points of the front surface lenses fall at the desired locations relative to the rear reflecting surface.

In addition, these arrangements are designed with the assumption that the projected light is parallel to the projection axis and thus normally incident on the screen surface. For a flat screen, this is generally true only in a central portion of the screen near the projection axis. With increasing distance away from the projection axis, the angle of incidence of the projected light increases, increasing the likelihood that the pixels will be partly or totally intercepted by the light absorbing areas.

Accordingly, it is an object of the invention to provide a front projection screen in which projected light is reflected by an array of light reflecting areas bordered by non-reflecting areas for image contrast, which screen does not rely upon a front surface array of lenses to concentrate the light and does not rely for optimum performance upon control of screen thickness and registration between arrays on the front and back surfaces of the screen.

To this end the front projection screen according to the invention is characterized in that the lenticular lens array is arranged on the rear surface and comprises sequentially adjacent lens elements, each element having a tip portion and sidewall portions, the sidewall portions being steeply inclined to direct light from the image source by reflection to the tip portion, and in that the screen comprises external light reflective means adjacent to at least the tip portions for reflecting the directed light back through the screen and into the audience space and light-absorbing means adjacent to at least the sidewall portions for absorbing ambient light.

Horizontal spreading of light into the audience field is accomplished primarily by total internal reflection of the externally reflected light rays by the sidewalls of the lenticules, and refraction of the light rays at the front surface of the screen.

Radiation which is incident through the light transmissive layer on the sidewall portions of the lens elements will, dependent on the angle of incidence, be reflected thereon or partly emerge to the exterior *via* these sidewall portions on the rear surface away from the audience space. Since the lens elements are positioned in such a way that the sidewall portions extend at a small angle to the image beam from the image source, light from the image beam will be substantially only reflected and a considerable part of the ambient light, incident under a larger angle, will leave the plate on its rear side *via* the sidewall portions. Thus, relatively less ambient light is reflected than light of the image beam so that the contrast in the projected image is higher.

A first embodiment of the front projection screen according to the invention is characterized in that the lenticular lens array is a linear array and comprises vertically oriented mutually parallel lenticular lens elements extending the entire vertical length of the screen, each lenticule having two sidewall portions.

A preferred embodiment of the front projection screen according to the invention is characterized in that the lenticular elements have a height to base width ratio of from about 1:2 to 6:1 and a base width to top width ratio of from about 2:1 to 20:1.

This is a preferred arrangement to provide a desired distribution of light. The ratios are chosen in view of an optimum efficiency in accordance with the refractive index of preferred materials for the light transmissive layer.

An alternative embodiment of the front projection screen according to the invention is characterized in that the lenticular lens array comprises adjacent lens elements extending across the screen in two substantially perpendicular directions, each element comprising a truncated pyramid having a substantially rectangular base portion, four sidewall portions and a tip portion.

By varying the ratio of the sides of the base of the pyramids the distribution of light in the vertical and horizontal direction can be changed.

A further embodiment of the front projection screen according to the invention is characterized in that the external absorbing means comprises light-absorbing material being deposited in spaces between adjacent lens elements.

The light emerging from the sidewall portions is absorbed and can no longer reach the audience space via other paths, for example, after reflection at other faces. Also the maximum angle of incidence at which total internal reflection occurs at the sidewall portions may be reduced, thereby causing less ambient light to be reflected and more ambient light to be absorbed at the tip portions.

In the case that the lens elements are shaped as pyramids a greater effective area of black masking will be obtained, so that the contrast of displays viewed in ambient light will be improved. Especially, the absorption of ambient light predominantly directed from above or below will be improved.

The light-absorbing material can be in the form of black filaments or black particles.

In front projection screens according to the invention light diffusion means may be employed in order to increase the vertical distribution of light provided by the projection lenses, so that the image light is spread into the audience space. This diffusion means can be realized in different ways.

An embodiment of the front projection screen according to the invention is characterized in that the light diffusing means comprises a bulk diffusor incorporated in the light transmissive layer.

A bulk diffusor consists of transparent particles homogeneously incorporated in the plate and having a refractive index which differs from the refractive index of the plate material. The bulk diffusor spreads the light through the plate uniformly in all directions and thus also causes light spreading in the direction in which the lenticular lenses extend on the rear side of the plate.

Preferably, the bulk diffusor is provided as a thin layer in the light transmissive layer.

A thin layer has the advantage that the screen permits of a higher resolution for a picture displayed on the screen, as compared with a screen in which the bulk diffusor is spread throughout the thickness of the plate.

An alternative embodiment of the front projection screen according to the invention is characterized in that the screen is provided with a second linear lenticular lens array arranged perpendicularly to the main array.

This second linear array can be arranged on the front surface of the light transmissive layer or can be imbedded in that layer. Such an array aids in the distribution of light in the vertical direction.

A further embodiment of the front projection screen is characterized in that the screen additionally comprises a Fresnel lens.

In this way is provided for vertical control of the mean direction of projected light returned to the audience space.

The Fresnel lens can be circular in combination with a flat screen.

The Fresnel lens can also be a horizontally oriented linear Fresnel lens in combination with a screen curved in the horizontal direction.

In this way can be compensated for the angle at which projected light strikes the screen for providing a degree of normally incident light rays.

Further can the facets of the linear Fresnel lens be curved so that the linear Fresnel lens provides for the dual purpose of spreading light vertically and controlling the direction of incident or projected rays. This curvature may be cylindrically convex or cylindrically concave.

A further embodiment of the front projection screen according to the invention is characterized in that the screen additionally comprises a horizontal linear Fresnel lens on the front surface.

By arranging an additional Fresnel lens on the front surface of the screen the mean direction of projected light returned to the audience space can be vertically controlled to compensate for the change in angle that the projected light makes with the screen normal at different positions of the screen. This measure is most needed when the projection distance is relatively short or the projection screen is relatively large.

A further embodiment of the front projection screen according to the invention is characterized in that the external reflection means comprises a layer having a mirrored surface adjacent the rear surface of the light transmissive layer.

The mirror surface may be formed by applying a reflective coating to plastic (e.g. acrylic), or glass, or may be a metallized film (e.g. polyester) with the reflecting surface being on the rear surface. The reflecting layer may also be applied directly to the tips of the lenticules. The latter can be readily accomplished if black masking has been provided which blocks the mirrorizing of the sides of the lenticules.

The invention will be further described with reference to the drawings in which

Figure 1 is a perspective view of an embodiment of a front projection liquid crystal display (LCD) color television system employing a front projection screen;

Figure 2 is a horizontal cross-section view showing a portion of one embodiment of the front projection screen of the invention;

Figure 3 is a cross-section view similar to that of Figure 2 showing a portion of a preferred embodiment of the screen;

Figure 4 is a cross-section view of one lenticule showing a reflective coating on its tip portion;

Figure 5 is a perspective view of another embodiment of the invention in which the lenticules are truncated pyramids;

Figure 6 is a cross-section view of another embodiment of the invention, in which the front surface of the screen comprises a Fresnel lens;

Figure 7 is a perspective view of still another embodiment of the invention in which the screen is curved in a horizontal direction and the front surface of the screen comprises a horizontally-oriented linear Fresnel lens.

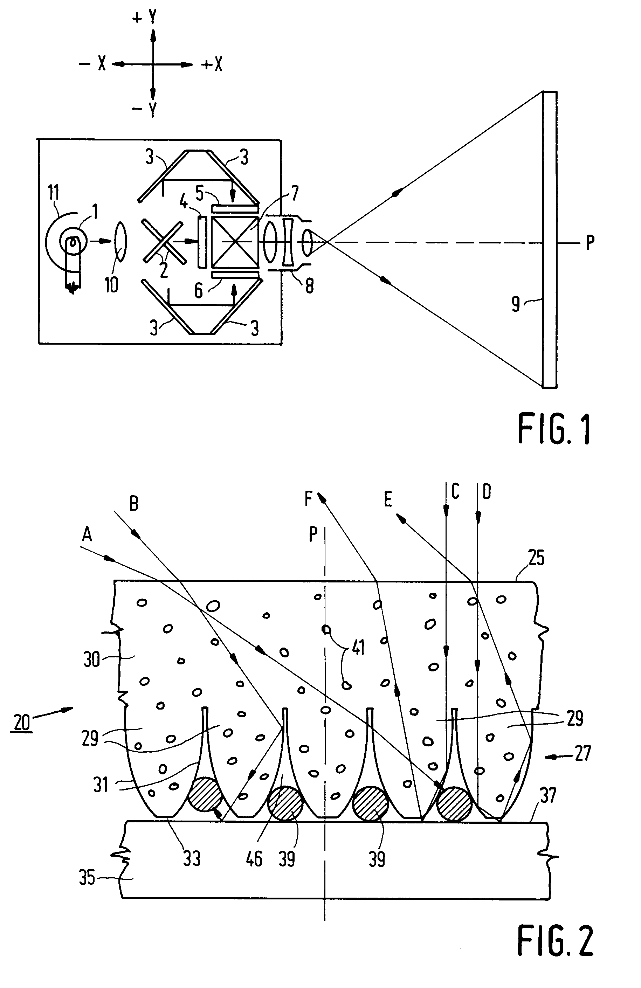

An embodiment of a LCD color television projection system employing a front projection screen is illustrated in Figure 1. In this prior art arrangement, light from a tungsten halogen lamp 1 is variously transmitted and reflected through a crossed pair of dichroic mirrors 2 and adjacent mirrors 3 to pass through three liquid crystal displays 4, 5 and 6. These three LCDs modulate three channels to create the read, green, and blue portions of a TV picture. The dichroic mirrors 2 break the white light source 1 into red, blue, and green portions of the spectrum. These three color portions are then recombined by way of a dichroic prism 7. The recombined light is projected by way of a projection lens 8 along a projection axis P to a projection screen 9.

This arrangement also includes a condenser arrangement consisting of a condenser lens 10 and reflector 11. The condenser lens 10 is designed for maximum collection efficiency to collect light emitted in the +X direction. The spherical reflector 11 collects light emitted in the -X direction and images the light of the lamp back onto itself.

Figure 2 is a horizontal cross-section view, illustrating one embodiment of a projection screen 20 in accordance with the invention. Light transmissive layer 30 has a front surface 25 and a rear surface 27 defined by an array of vertically oriented lenticules 29, each lenticule having steeply inclined sidewall portions 31 and a tip portion 33. Adjacent this array is a layer 35 having a light reflective surface 37 in close proximity to the tip portions 33 of the lenticules 31. Alternatively, the reflective surface 37 may be optically coupled to the array. For example, an adhesive can be used to fix the reflective surface against the tip. If the adhesive is optically transmissive, and if it has a refractive index approximately equal to the medium of the transmissive sheet, then optically coupling will be realized. Black masking is in the form of light absorbing filaments 39, located in the grooves between the lenticules 31.

In operation, light rays, designated A through D, from both the projected image and from ambient sources enter layer 30, and are refracted in accordance with Snell's Law. Light rays A and B, representative of ambient light, enter at oblique angles of incidence with respect to the projection axis P. Ray A strikes a lenticule sidewall with an incident angle too small for total internal reflection, and thus is transmitted and absorbed by a filament 39. Ray B strikes a lenticule at an incident angle large enough for total internal reflection, but too small to be transmitted to the tip portion of the lenticule. Ray B is thus transmitted through the adjacent sidewall, reflected from surface 37 and absorbed by a filament 39.

Rays C and D, representative of light from the projected image, enter layer 30 along the projection axis P. Consequently, these rays strike the sidewalls of the lenticules at relatively large angles of incidence, and are totally internally reflected to the tip portions of the respective lenticules, where they are transmitted to reflective surface 37 and reflected back as Rays E and F into layer 30 and thence refracted into the audience field.

Diffusion means in the form of light scattering particles 41 may be present to aid in the spreading of light into the audience field, particularly in the vertical direction.

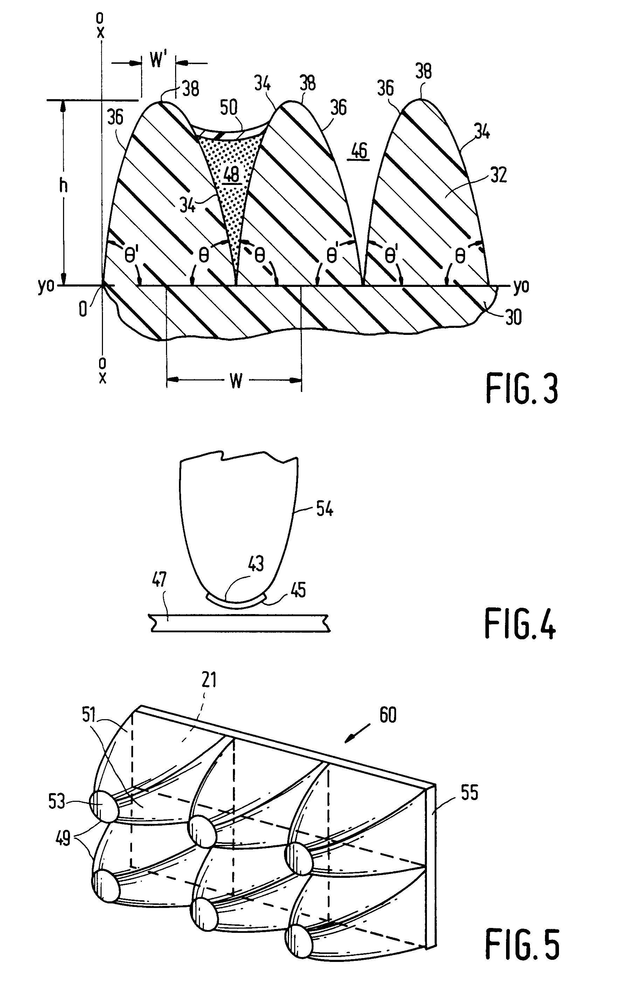

Figure 3 is a cross-section of three lenticular lens elements, each having side surfaces 34 and 36 and an upper tip surface 38. The side surfaces 34 and 36 may be linear, but are preferably convexed outward, and have an average slope $\theta$ and $\theta'$ selected to establish a degree of internal reflection desired to direct light from a projection source, underneath the plate, to the tip surface 38.

Usually, the sides 34 and 36 will be mirror images, i.e. the lenticules will be symmetrical. In

such case, $\theta = \theta'$. In analogy with what is known from the art of transmissive, or rear projection screens, it is possible also for the front projection screen of the present invention to use lenticules which are not symmetrical. In this case, the distribution of light horizontally can still be symmetrical if adjacent lenticules are reversed, so that $\theta$ and $\theta'$ are reversed, as shown in the figure 3. Other arrangements to provide a desired distribution of light are also possible.

In a preferred embodiment, the ratio of the base width W of the lenticules to the width W' of the upper tip surface 38 is in the range of from about 2:1 to 20:1, and preferably at least 3:1. The ratio of the lenticule height h to the base width W is in the range of from about 1:2 to 6:1, and is preferably at least 2:3.

Ratios of height to base width larger than 6:1 are possible, but are not necessary. Ratios of height to base width smaller than 1:2 have reduced efficiently. Ratios of base width to tip width smaller than 2:1 have poorer rejection of ambient light because a larger percentage of the rear surface must have a reflective means; else the efficiency is reduced. Ratios of base width to tip width greater than 20:1 have light concentrated to such a small area that providing sufficient accuracy to the side wall shape becomes a problem.

In setting the ratio of base width W of the lenticules to the width W' of the upper tip surface 38, and the ratio of the lenticule height h to the base width W, the refractive index of the light transmissive layer should be taken into account. For the preferred material, polymethylmethacrylate, the refractive index is about 1.5. For other practical materials, this value will not change sufficiently to invalidate the stated ranges or ratios.

Figure 4 shows an alternative way of providing an external reflective surface on the lenticular array, simply by selectively coating the tip portions 43 of the lenticules with a layer 45 of a light reflecting material, such as aluminium or silver.

The apparent contrast of images displayed on front projection screens according to the present invention may be enhanced by applying a light absorbing material, so-called black masking, between the lenticules to reduce reflected ambient light. Black masking is shown in both Figure 2 and Figure 3. In Figure 2, such masking is accomplished by placing a black filament 39 or thread capable of absorbing visible light in the grooves 46 between the lenticules. In Figure 3, such masking is accomplished by filling a substantial portion of the grooves 46 with discreet black particles 48, and by containing said particles by means of a skin 50 which extends between the lenticular ribs 32 and over the groove 46. By properly choosing the refractive index of the filling material the maximum angle for total internal reflection can be adjusted to provide optimum selectivity between light rays originating from the image source and ambient light. Such a black mask construction for a rear projection screen is described in U.S. patent 4,605,283.

Where the reflective means is provided by coating the tips of the lenticules, the absorption means may simply be a sheet (47 in Figure 4) having a light absorbing surface placed behind the lenticular array. This eliminates the need of providing individual filaments or particles within the grooves themselves, thus improving manufacturibility of the screen.

As mentioned above, diffusion means may be employed in such front projection screens in order to increase the vertical distribution of light from the projection screen lenses. This diffusion can be effected by a bulk property of the refracting material from which the screen is constructed, or can be due to surface texturizing of any surface, preferably not the rear lenticular surface, or can be a diffusion layer present in a composite laminate, or can be produced by some combination of these approaches.

As an alternative to diffusion means, a longitudinal lenticular lens array at right angles to the main array of Figure 4 may be employed to aid in the distribution of light in the vertical direction. The focal length of the elements of the array should be substantially different from the thickness of the transmissive layer. The array can be on the surface 25 or imbedded in the sheet 30, provided that there is a refractive index change at the array interface to provide for optical power. A practical change in refractive index for this purpose would be 0.1 or greater. Plastics are known which will provide this amount of variation of refractive index, even within one generic class, such as acrylics.

The front surface of the screen may be coated to reduce reflections or the surface may have a special texture which reduces reflections.

In the event that it is desired to also have a horizontal linear Fresnel on the front surface 25 to provide for vertical control of the mean direction of projected light returned to the audience space, or to have such horizontal linear Fresnel in conjunction with a horizontally curved screen to compensate for the angle at which projected light strikes the screen, the surface of the facets of the linear Fresnel lens can be curved so that the linear Fresnel lens provides for the dual purpose of spreading light vertically and controlling the direction of incident or projected rays. Such curvature could be cylindrically convex or cylindrically concave.

Front projection screens made in accordance with the present invention can be manufactured by various processes, including compression molding, injection molding, extrusion, hot roller pressing, casting and photo-polymerization processes. Such screens can be constructed of optically transparent or translucent solid materials such as inorganic glasses and a variety of plastics. In addition, the screen composition can also be a mixture of materials. A preferred material is polymethylmethacrylate. The front surface of the screen may be treated with a coating to improve its durability.

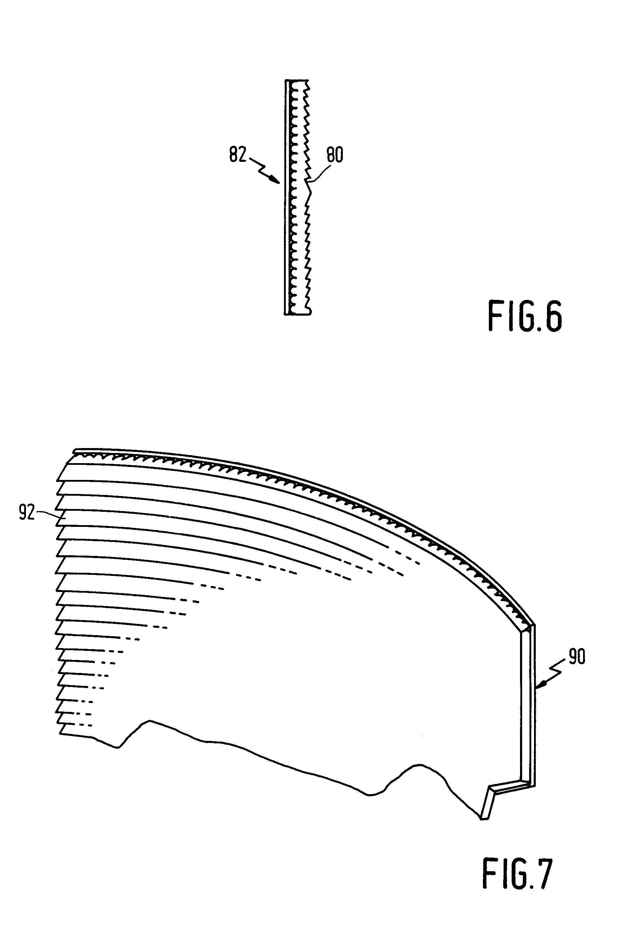

An important variation of the design of the screen, shown in Figure 5, is to replace the longitudinal lenticular array with a two dimensional array 60 of 4-sided truncated pyramids 49 having horizontal and vertical cross-sections corresponding to the cross-section of a linear lenticular. The pyramids need not have square bases, but can have, for example, a narrower pitch in the vertical direction which will result in a narrower distribution of light vertically than horizontally. Figure 5 shows such an array 60 in which truncated pyramids 49 comprise sides 51 and tips 53, and black masking 55 is present in the spaces between the pyramids 49 in both the vertical and horizontal directions. Use of the pyramids will result in a greater effective area of black masking and so will improve the contrast of displays viewed in ambient light. This variation will especially improve the absorption of ambient light predominantly directed from above or below.

If it is needed, a Fresnel lens 80 can be introduced on the front surface (i.e. the surface observed by the audience) of a one-piece screen 82 shown in Figure 6. Such a Fresnel lens can be designed to compensate for the change in angle that the projected light makes with the screen normal at different portions of the screen. This is most needed if the projection distance is relatively short or the projection screen is relative large.

Another method of compensating for the angle at which projected light strikes the screen is to curve the screen concavely as viewed from the audience field. As will be appreciated, curving the screen in one direction and using a linear collimating Fresnel lens in the other direction is advantageous in providing a degree of normally incident light rays otherwise obtainable only by spherically curving the screen, which is often difficult to achieve in practice. Such an arrangement is shown in Figure 7, in which horizontally oriented linear Fresnel 92 is present on the front surface of screen 90, which is curved in the horizontal direction only.

## Claims

1. A front projection screen (20) for displaying an image from an image source in an audience space, the screen (20) comprising a light transmissive layer (30) having a front surface (25) and a rear surface (27), the front surface (25) facing the audience space, and comprising a lenticular lens array, characterized in that the lenticular lens array is arranged on the rear surface (27) and comprises sequentially adjacent lens elements (29), each element (29) having a tip portion (33) and sidewall portions (31), the sidewall portions (31) being steeply inclined to direct light from the image source by reflection to the tip portion (33), and in that the screen comprises external light reflective means adjacent to at least the tip portions (33) for reflecting the directed light back through the screen (20) and into the audience space and light-absorbing means adjacent to at least the sidewall portions (31) for absorbing ambient light.

2. A front projection screen as claimed in Claim 1, characterized in that the lenticular lens array is a linear array and comprises vertically oriented mutually parallel lenticular lens elements (32) extending the entire vertical length of the screen (20), each lenticule (32) having two sidewall portions (34), (36).

3. A front projection screen as claimed in Claim 2, characterized in that the lenticular elements (32) have a height to base width ratio of from about 1:2 to 6:1 and a base width to top width ratio of from about 2:1 to 20:1.

4. A front projection screen as claimed in Claim 1, characterized in that the lenticular lens array (60) comprises adjacent lens elements (49) extending across the screen (20) in two substantially perpendicular directions, each element (49) comprising a truncated pyramid having a substantially rectangular base portion (52), four sidewall portions (51) and a tip portion (53).

5. A front projection screen as claimed in Claim 1,2,3 or 4, characterized in that the external absorbing means comprises light-absorbing material being deposited in spaces (46) between adjacent lens elements.

6. A front projection screen as claimed in Claim 5, characterized in that the light-absorbing material is in the form of black filaments (39).

7. A front projection screen as claimed in Claim 5, characterized in that the light-absorbing material is in the form of black particles (48).

8. A front projection screen as claimed in any one of the preceding Claims, characterized by light diffusing means for spreading the image light into the audience space.

9. A front projection screen as claimed in Claim 8, characterized in that the light diffusing means comprises a bulk diffusor incorporated in the light transmissive layer (30).

10. A front projection screen as claimed in Claim 9, characterized in that the bulk diffusor is provided as a thin layer in the light transmissive layer (30).

11. A front projection screen as claimed in one of the claims 1 or 2, characterized in that the screen (20) is provided with a second, linear lenticular lens array arranged perpendicularly to the main array.

12. A front projection screen as claimed in one of the preceding Claims, characterized in that the screen (20) additionally comprises a Fresnel lens.

13. A front projection screen as claimed in Claim 12, characterized in that the Fresnel lens is circular and the screen is flat.

14. A front projection screen as claimed in Claim 12, characterized in that the Fresnel lens is linear and oriented in the horizontal direction, and the screen is curved in the horizontal direction.

15. A front projection screen as claimed in Claim 14, characterized in that the Fresnel facets are curved in the vertical cross section.

16. A front projection screen as claimed in any one of the preceding Claims, characterized in that the screen (20) additionally comprises a horizontal linear Fresnel lens on the front surface (25).

17. A front projection screen as claimed in any one of the preceding Claims, characterized in that the external reflection means comprises a layer having a mirrored surface (37) adjacent the rear surface (27) of the light transmissive layer (30).

FIG.1

FIG.2

FIG.3

FIG.4

FIG.5

FIG.6

FIG.7